**Europäisches Patentamt**

**European Patent Office**

**Office européen des brevets**

(19)

(11) Veröffentlichungsnummer: **0 154 883**
**A2**

# EUROPÄISCHE PATENTANMELDUNG

(12)

(21) Anmeldenummer: 85102117.0

(22) Anmeldetag: 27.02.85

(51) Int. Cl.⁴: **B 60 R 22/46**

(30) Priorität: 29.02.84 DE 3407376

(43) Veröffentlichungstag der Anmeldung: 18.09.85
Patentblatt 85/38

(84) Benannte Vertragsstaaten: **DE FR GB IT SE**

(71) Anmelder: **AUTOFLUG GMBH,**
**Industriestrasse 10 Postfach 1180, D-2084 Rellingen (DE)**

(72) Erfinder: **Sedlmayr, Gerhard, Dr., Königgrätzstrasse 1,**
**D-2000 Hamburg 52 (DE)**
Erfinder: **Just, Herbert, Dipl.-Ing., Bundesstrasse 1,**
**D-2059 Hohnstorf (DE)**

(74) Vertreter: **Kühnemann, Klaus et al, Patentanwälte**
**Dipl.-Ing. Klaus Kühnemann Dr.-Ing. Karl-Ernst Müller**
**Sonderburgstrasse 36, D-4000 Düsseldorf 11 (DE)**

(54) **Vorrichtung zur Verhinderung der Vorwärtsverlagerung von angeschnallten Personen.**

(57)    Bei einer Vorrichtung zur Verhinderung der Vorverlagerung von angeschnallten Personen, insbesondere in Kraftfahrzeugen, bestehend aus einem auf einem Träger verschieblichen Fahrgastsitz, einem Dreipunkt-Sicherheitsgurt sowie einem an einem Fahrzeugaufbauteil befestigten selbstsperrenden Gurtaufroller, soll vermieden werden, daß es im Unfallgeschehen aufgrund der im Sicherheitsgurtsystem vorhandenen Gurtlose und der bei Krafteinwirkung eintretenden Gurtdehnung zu einer den angeschnallten Insassen gefährdenden Vorverlagerung seines Körper kommt, wobei gleichzeitig ein Aufschlagen des Insassen an den vor ihm liegenden Fahrzeugarmaturen ausgeschlossen sein soll. Hierzu ist vorgeschlagen, daß der Fahrgastsitz (11) mittels eines im Unfallgeschehen von einem fahrzeugseitigen Sensor auslösbaren Antriebs (24, 25, 26) nach hinten verschiebbar und an eine an einem Fahrzeugaufbauteil beweglich geführte Klemmeinrichtung (18) für das Gurtband (16) gekuppelt ist.

## Vorrichtung zur Verhinderung der Vorwärts-
## verlagerung von angeschnallten Personen

Die Erfindung betrifft eine Vorrichtung zur Verhinderung der Vorverlagerung von angeschnallten
Personen im Unfallgeschehen, insbesondere in Kraftfahrzeugen, bestehend aus einem auf einem Träger
verschieblichen Fahrgastsitz, aus einem Dreipunkt-
Sicherheitsgurt sowie einem an einem Fahrzeugaufbauteil befestigten selbstsperrenden Gurtaufroller.

Bei Sicherheitsgurtsystemen mit einem Dreipunkt-Sicherheitsgurt und einem selbstsperrenden Gurtaufroller
für die Blockierung des weiteren Gurtauszuges besteht
im Falle eines Unfalls allgemein folgendes Problem:
Wenn es zu einem Unfall kommt, geschieht die Blockierung
des Gurtbandes herkömmlich im Gurtaufroller, also
an einer Stelle, die verhältnismäßig weit von dem
den Körper der angeschnallten Person berührenden
Gurtabschnitt entfernt ist. Dies hat zur Folge,
daß eine vergleichsweise große Gurtlänge zwischen der Blockierstelle und dem über den Körper der Person verlaufenden Gurtband vorhanden ist, deren unter dem Einfluß der bei einem Unfall auftretenden Kräfte erfolgende Dehnung zusätzlich zu der beim Anlegen des Gurtes entstehenden Gurtlose und zu der im Körperbereich der Person erfolgenden Gurtdehnung eine Verlängerung des Gurtbandes bewirkt.

Hinzu kommt eine weitere zusätzliche Gurtlängung durch den sogenannten Filmspuleneffekt im Gurtaufroller, der sich dadurch erklärt, daß der in mehr oder weniger dichten Windungen von der Aufrollfeder auf die diesbezügliche Welle aufgewickelte Gurt unter Anwendung entsprechender Kräfte noch wesentlich strammer aufgewickelt werden könnte, so daß bei normaler Wicklung durch starken Zug am Gurtband eine Verdichtung der vorgenommenen Gurtwicklung unter gleichzeitiger Freigabe einer entsprehenden Gurtlänge erfolgen muß.

Alles in allem ergibt sich somit eine beträchtliche Verlängerung des Gurtbandes, die im Unfallgeschehen eine den Insassen gefährdende Vorverlagerung des angeschnallten Körpers gestatten kann.

Zur Lösung dieses Problems sind bisher verschiedene Wege beschritten worden, die sich insbesondere auf die Anbringung von Gurtstrammern oder auf die Anordnung von Klemmeinrichtungen für das Gurtband richten. Die pyrotechnisch angetriebenen Gurtstrammer (DE-OS 30 40 667) wirken dabei auf die Gurtaufwickelwelle des selbstsperrenden Gurtaufrollers, die im Unfallgeschehen aufgrund der Auslösung des pyrotechnischen Gurtstrammers durch einen fahrzeugseitigen Sensor in Aufwickeldrehung versetzt wird, dadurch zunächst die Gurtwicklung fester anzieht und anschließend die Gurtlose soweit als möglich einziehen soll. Die Anbringung von Gurtklemmeinrichtungen (DE-OS 25 40 302) dagegen verfolgt das Ziel, durch Klemmung des Gurtbandes die Blockierstelle nahe an den Körper der angeschnallten Person zu verlegen, um auf diese Weise eine den Insassen gefährdende Vorverlagerung des Körpers zu verhindern.

Diesen bekannten Vorschlägen ist jedoch jeweils der Nachteil zu eigen, daß die Gurtlose nicht vollständig beseitigt werden kann. So kann durch die Strammvorrichtung insbesondere die am Körper der angeschnallten Person befindliche Gurtlose allenfalls in geringem Umfang beseitigt werden, weil die Stramm- und Aufwickelkräfte zur Überwindung der Reibung des Gurtbandes an seiner Umlenkstelle sowie am Körper des Insassen kaum ausreichen; darüber hinaus ist nach der Strammung des Gurtbandes und der Blockierung des Gurtaufrollers eine Längung des Sicherheitsgurtes aufgrund der Dehnung des Gurtbandes durch die auftretende Belastung nach wie vor gegeben.

Bezüglich der Klemmeinrichtungen tritt folgender Nachteil auf: Da die Klemmeinrichtung bei dem bekannten Sicherheitsgurtsystem erst im Zusammenwirken mit der Blockierung des Gurtaufrollers in ihrer Klemmwirkung ausgelöst wird, ist es zum Zeitpunkt des Eintretens der Klemmwirkung aufgrund der nötigen Reaktionszeit im selbstsperrenden Gurtaufroller meist schon zu einem Durchrutschen von Gurtband durch die Klemmeinrichtung und den Umlenkbeschlag gekommen, wodurch die am Körper der angeschnallten Person befindliche Gurtlose weiter vergrößert und

- 4 -

0154883

somit einer den Insassen gefährdenden Vorverlagerung eher Vorschub geleistet wird.

Der Erfindung liegt daher die Aufgabe zugrunde, eine Vorrichtung zur Verhinderung der Vorverlagerung von angeschnallten Personen im Unfallgeschehen, insbesondere in Kraftfahrzeugen,zu schaffen, die eine den Insassen gefährdende Vorwärtsverlagerung des Körpers weitgehend vermeidet und gleichzeitig bewirkt, daß ein Aufschlagen des Insassen an den vor ihm liegenden Fahrzeugarmaturen ausgeschlossen ist.

Die Lösung dieser Aufgabe ergibt sich einschließlich vorteilhafter Ausgestaltungen und Weiterbildungen aus dem Inhalt der Patentansprüche, welche dieser Beschreibung vorangestellt sind.

Mit der erfindungsgemäßen Lösung ist der Vorteil verbunden, daß insbesondere Fahrzeuginsassen mit kleiner Statur, die relativ nahe vor den Fahrzeugarmaturen sitzen, um diese auch bequem bedienen zu können, im Unfallgeschehen infolge des durch einen den Unfall anzeigenden Sensor ausgelösten Rückfahrens des Fahrzeugsitzes automatisch von den Fahrzeugarmaturen nach hinten entfernt werden, so daß auch eine eintretende Vorverlagerung des angeschnallten Insassen nicht zu einem Aufschlagen des Körpers auf den Fahrzeugarmaturen führt. Da gleichzeitig die Rückwärtsbewegung des Sitzes von den Armaturen weg über die Kopplung des Sitzes an eine in der B-Säule verfahrbare Klemmeinrichtung für das Gurtband in eine entsprechende Abwärtsbewegung dieser Klemmeinrichtung umgesetzt wird, ist dafür Sorge getragen, daß der vor dem Körper des Insassen verlaufende Sicherheitsgurt automatisch in dem Maße gestrammt wird, in welchem die Sitzbewegung erfolgt, so daß der Körper des Insassen an dem fahrenden Sitz gehalten wird. Dabei kann zweckmäßig in die Kopplung zwischen Sitzbewegung und Klemmeinrichtungsbewegung eine Übersetzungsvorrichtung eingeschaltet sein, welche die Gurtstraffung gegenüber der Sitzbewegung verstärkt.

Bei einem bevorzugten Ausführungsbeispiel ist der Sitz von zwei druckgasbetätigten Zylindern getrieben, die nach Auslösung durch den fahrzeugseitigen Sensor für eine Entriegelung der Verriegelungsstange des Sitzes am Sitzträger und das Rückfahren des Sitzes sorgen, wobei eine Hakensperre dafür sorgt, daß bei abfallendem Gasdruck oder bei Erreichen der Endstellung keine Sitzbewegung mehr erfolgen kann. Die Kopplung zwischen Sitz und Klemmeinrichtung geschieht über ein Seil, welches die horizontale Bewegung des Fahrzeugsitzes in eine vertikale Bewegung der Klemmeinrichtung mittels geeigneter Seilführung über Umlenkrollen umsetzt. Die Klemmeinrichtung selbst kann pyrotechnisch oder durch die vom Seil herbeigeführte Bewegung selbst auslösbar eingerichtet sein.

Bei einer weiterhin bevorzugten Ausführungsform der Erfindung ist zusätzlich eine auf die Gurtaufwickelwelle des Gurtaufrollers wirkende Strammvorrichtung für den Sicherheitsgurt vorgesehen, welche zeitlich vor der Auslösung des Fahrgastsitzantriebs sowie der Klemmrichtung in Tätigkeit gesetzt wird und für eine Beseitigung des Filmspuleneffektes im Gurtaufroller und eine Vor-Strammung des Sicherheitsgurtes sorgt. Auf diese Weise wird die angeschnallte Person schon vor dem Ablauf des Rückfahrens des Sitzes an denselben gezogen und der Gesamtwirkungsgrad der erfindungsgemäßen Vorrichtung wesentlich verbessert.

Die Strammvorrichtung kommt weiterhin insbesondere dann zum Tragen, wenn der Sitz aufgrund der Körpermaße des angeschnallten Insassen ohnehin in seiner hintersten Stellung steht, so daß im Unfallgeschehen eine Rückwärtsfahrt nicht mehr möglich ist. In diesem Fall trägt die Strammvorrichtung wesentlich zur Verhinderung einer Vorverlagerung des Körpers der angeschnallten Insassen bei.

In der Zeichnung sind Ausführungsbeispiele der Erfindung wiedergegeben, welche nachstehend erläutert sind. Es zeigen:

Fig. 1   die Vorrichtung in einer schaubildlichen Ansicht unter Weglassen des Fahrzeugaufbaus,

Fig. 2   die Vorrichtung gemäß Figur 1 in einer grundrißlichen Aufsicht,

Fig. 3   ein anderes Ausführungsbeispiel der Vorrichtung in einem Ausschnitt gemäß Figur 2,

Fig. 4   ein Ausführungsbeispiel einer verfahrbaren Klemmeinrichtung im Längsschnitt in schematischer Darstellung,

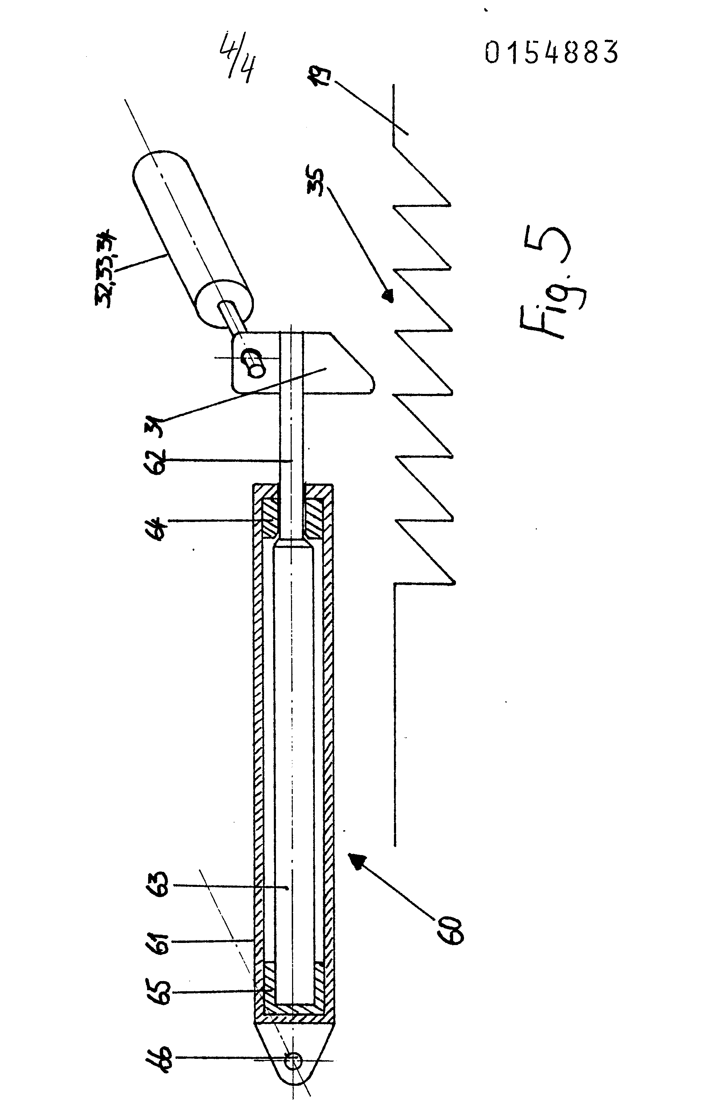

Fig. 5   eine ausschnittsweise vergrößerte Darstellung der Vorrichtung gemäß Fig. 2 mit einer energieabsorbierenden Einrichtung.

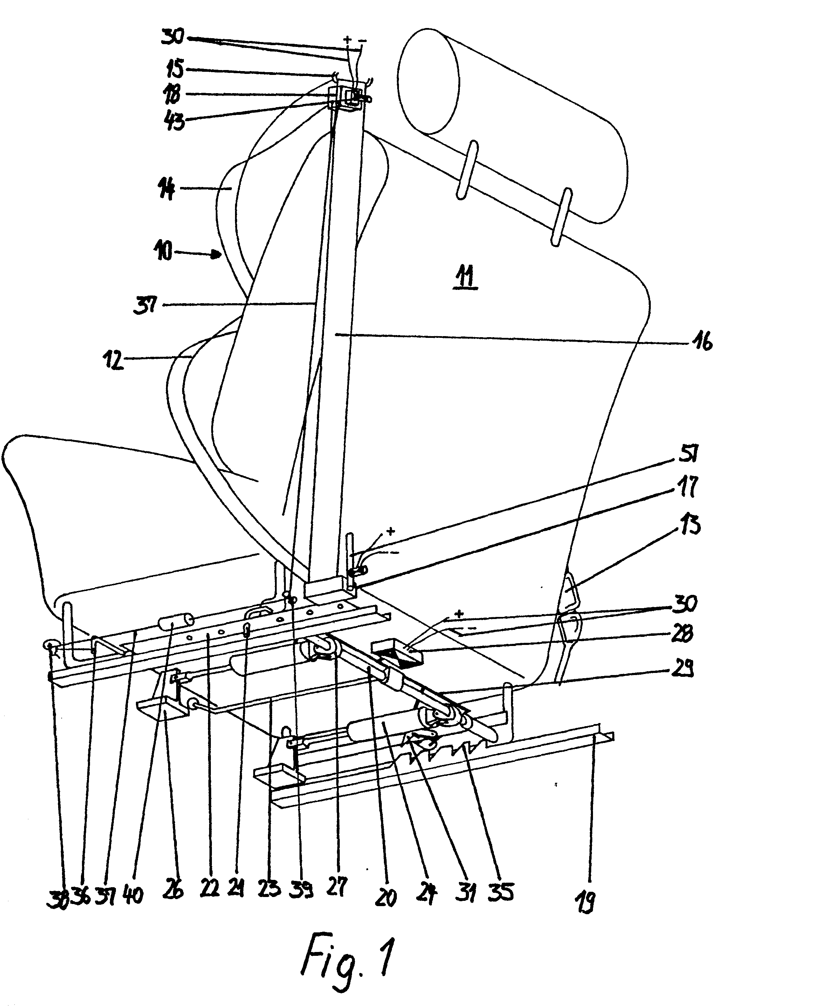

Der Dreipunkt-Sicherheitsgurt 10 für den Fahrgastsitz 11 eines Kraftfahrzeuges geht aus von einem nicht dargestellten Befestigungsbeschlag der in Figuren 1 - 3 nicht dargestellten B-Säule eines Kraftfahrzeuges, verläuft von dort als Beckengurt 12 zu einem Gurtschloß 13, weiter als Brustgurt 14 zu einem an der nicht dargestellten B-Säule angeordneten Umlenkbeschlag 15 und nach der Umlenkung in einen senkrechten Gurtabschnitt 16 bis in einen selbstsperrenden Gurtaufroller 17. Im Bereich des Umlenkbeschlages 15, der sich etwa in Kopfhöhe der angeschnallten Person in der nicht dargestellten B-Säule der Fahrzeugkarosserie befindet, ist eine Klemmeinrichtung 18 angeordnet, die ebenfalls an oder in der B-Säule angebracht ist; in gleicher Weise kann der Gurtabschnitt 16 in oder an der B-Säule verlaufen, ebenso wie der Gurtaufroller 17 offen oder verdeckt angebracht sein kann.

Der Fahrgastsitz 11 ist auf einem aus zwei parallel in Fahrzeuglängsrichtung angeordneten Schienen bestehenden Sitzträger 19 verschieblich und weist zu seiner Verriegelung in einer bestimmten Sitzstellung eine quer zum Sitzträger 19 angeordnete Verriegelungsstange 20 auf, welche drehbar gelagert und mit einer hakenförmigen Gestaltung 21 in einer am Sitzträger 19 verlaufenden Lochleiste 22 verrastbar ist. Die Verriegelungsstange 20 ist unter dem Sitz 11 im Bereich von dessen Rückenlehne angeordnet, so daß eine von der Verriegelungsstange 20 nach vorne reichende Betätigungsstange 23 angeordnet ist, mittels derer die Verriegelungsstange gedreht und so zur Sitzverstellung aus ihrer Sperrstellung gebracht werden kann.

Parallel zum Sitzträger 19 sind unter dem Sitz 11 in Fahrzeuglängsrichtung zwei druckgasgetriebene Kolbenzylinder 24 angeordnet, die sich mit ihren Kolbenstangen 25 an zugeordneten fahrzeugfesten Widerlagern 26 abstützen, und die selbst über einen Kniehebel 27 mit den Verriegelungsstangen 20 verbunden sind. Zur Versorgung der Zylinder 24 mit Druckgas ist eine zentrale pyrotechnische Einheit 28 vorgesehen, die über Druckgasleitungen 29 mit den Zylindern 24 verbunden ist. Die Zündung der pyrotechnischen Einheit 28 erfolgt über elektrische Leitungen 30, die zu dem nicht dargestellten fahrzeugseitigen Sensor führen.

Am Sitz 11 ist seitlich über dem Sitzträger 19 eine drehbeweglich gelagerte Sperrklinke 31 angeordnet, die von einem Stift 32 in ihrer entsperrten Stellung gehalten ist. Der Stift 32 sitzt an einem in einem Zylinder 33 geführten Kolben 34, wobei der Zylinder 33 über die Druckgasleitung 29 ebenfalls an die pyrotechnische Einheit 28 angeschlossen ist. Die Sperrklinke 31 wirkt zur Verriegelung des Sitzes 11 mit einer Verzahnung 35 zusammen, die an dem Sitzträger 19 ausgebildet ist.

An der Vorderseite des Sitzes 11 ist B-säulenseitig an einer Halterung 36 ein Seil 37 angeschlagen, welches zunächst nach vorne zu einer Umlenkrolle 38 geführt ist. Nach der dortigen Umlenkung ist das Seil 37 längs des nicht dargestellten Türschwellers des Kraftfahrzeuges bis in den Bereich der B-Säule nach hinten und dort über eine weitere Umlenkrolle 39 nach oben bis zur Verbindung mit der Klemmeinrichtung 18 geführt.

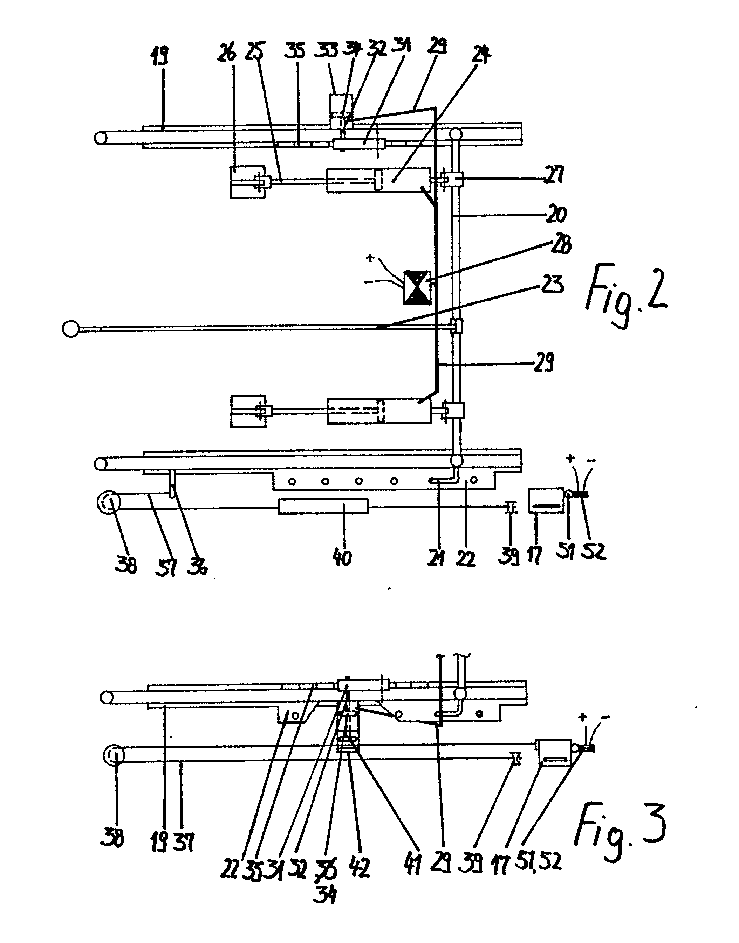

In dem in Figuren 1 und 2 gezeigten Ausführungsbeispiel ist in den Seilabschnitt zwischen Umlenkrolle 38 und Umlenkrolle 39 ein Seilspeicher 40 geschaltet, der für einen Ausgleich der Seillänge bei Verschiebung des Fahrgastsitzes 11 infolge von dessen Anpassung seiner Stellung an die Körpermaße des anzuschnallenden Insassen sorgt.

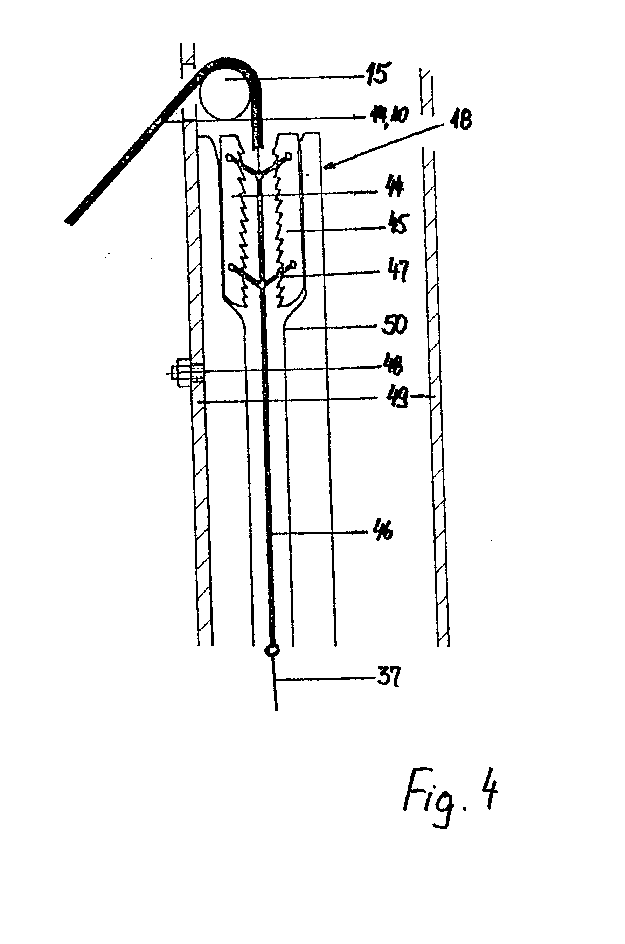

Auf eine derartige Anordnung ist in dem in Figur 3 gezeigten Ausführungsbeispiel verzichtet; hier ist das Seil 37 im Bereich des Gurtaufrollers 17 fahrzeugfest angeschlagen und schlaufenartig nach vorn und über die Umlenkrolle 38 wieder nach hinten bis zur Umlenkrolle 39 und sodann aufwärts zur Klemmeinrichtung 18 geführt. An dem Seilabschnitt zwischen der fahrzeugseitigen Befestigung und der Umlenkrolle 38 greift der Fahrzeugsitz 11 mit einer an ihm befestigten Zwinge 41 an, welche in geöffnetem Zustand längs des Seilabschnitts zwischen der Seilbefestigung und der Umlenkrolle 38 frei gleiten kann. Der Antrieb der Zwinge 41 zu deren geschlossener Stellung erfolgt über eine druckgasgesteuerte Kolbeneinheit 42, welche ebenfalls an die von der pyrotechnischen Einheit 28 herkommende Druckgasleitung 29 angeschlossen ist. Bei diesem Ausführungsbeispiel ist die Kolbeneinheit 42 gleichzeitig als Freigabeeinrichtung für die Sperrklinke 31 ausgebildet, die einschließlich der Verzahnung 35 am Sitzträger 19 bei dem Ausführungsbeispiel gemäß Figur 3 B-säulenseitig angeordnet ist.

Die in der B-Säule bewegliche Klemmeinrichtung 18 kann gemäß der Darstellung in Figur 1 so ausgebildet sein, daß eine bewegliche Klemmbacke über eine pyrotechnische Antriebseinheit 43 nach Auslösung über die elektrischen Zuleitungen 30 vom Fahrzeugsensor zur Anlage am Gurtband 16 gebracht wird, wobei beide Klemmbacken mit dem Seil 37 verbunden sind.

In Figur 4 ist ein Ausführungsbeispiel der beweglichen Klemmeinrichtung ohne eigenständige Auslösung der Klemmeinrichtung gezeigt: Hierbei sind Klemmbacken 44, 45 der Klemmeinrichtung 18 beiderseits einer Kolbenstange 46 aufeinander zubeweglich angeordnet und über Querlenker 47 jeweils mit der Kolbenstange 46 verbunden. Die Kolbenstange 46 ist an ihrem unteren Ende an dem Antriebsseil 37 angeschlagen. Bei dem gezeigten Ausführungsbeispiel ist die Klemmeinrichtung 18 seitlich neben dem Gurtband 16 angebracht, da das Gurtband 16 in einer Ebene mit der Kolbenstange 46 verläuft, und über Befestigungsmittel 48 an der B-Säule 49 des Kraftfahrzeuges befestigt.

Die Kolbenstange 46 ist einer sich von oben nach unten verjüngenden Zwangsführung 50 geführt, wobei der Übergang zu dem sich verjüngenden Teil der Zwangsführung 50 gerundet ist, und gleichzeitig auch die dem Seil 37 zugewandten Enden der Klemmbacken 44, 45 entsprechende Rundungen aufweisen.

Bei diesem Ausführungsbeispiel der Klemmeinrichtung 18 erfolgen Gurtklemmung und Abwärtsbewegung der Klemmeinrichtung gleichzeitig, und zwar dadurch, daß nach Zug am Seil 37 die Kolbenstange 46 nach unten bewegt wird. Aufgrund der beweglichen Anlenkung der beiden Klemmbacken 44, 45 an der Kolbenstange 46 werden die Klemmbacken bei dem durch ihre Abwärtsbewegung bewirkten Eintritt in den sich verengenden Teil der Zwangsführung 50 aufeinander zu bis zur Klemmung des Gurtbandes 16 bewegt. Durch die anschließende Abwärtsbewegung der Klemmbacken 44, 45 in der Zwangsführung 50 wird das Gurtband entsprechend straffgezogen; gleichzeitig sind entsprechende Sperrmittel vorgesehen, die eine rückwärts gerichtete Aufwärtsbe-

0154883

wegung der Klemmeinrichtung 18 in der Zwangsführung 50 ausschließen, so daß das Gurtband fest blockiert ist.

Schließlich wird die Vorrichtung zur Verhinderung der Vorverlagerung von angeschnallten Personen im Unfallgeschehen, insbesondere in Kraftfahrzeugen, noch ergänzt durch eine Strammvorrichtung 51, welche am Gurtaufroller 17 angeordnet ist und auf die Gurtaufwickelwelle des Gurtaufrollers 17 wirkt. Die Strammvorrichtung 51 ist über die elektrischen Zuleitungen 30 sowie einen Druckgasgenerator 52 auslösbar und betätigbar.

Die Vorrichtung zur Verhinderung der Vorverlagerung von angeschnallten Personen arbeitet unter Einbeziehung der Strammvorrichtung 51 in ihrem Ablauf folgendermaßen: Im Unfallgeschehen erfolgt vom Fahrzeugsensor aus über die Zuleitungen 30 zunächst die Zündung des Druckgasgenerators 52 zur Betätigung der Strammvorrichtung 51. Die dadurch bewirkte Drehung der Gurtaufwickelwelle des Gurtaufrollers 17 beseitigt den Filmspuleneffekt im Gurtaufroller und sorgt für eine Vor-Strammung des Sicherheitsgurtes 10, insbesondere im Bereich des senkrechten Gurtabschnitts 16, jedoch auch noch bezüglich der am Körper der angeschnallten Person befindlichen Gurtlose im Bereich des Brustgurtes 14.

Durch entsprechende Steuerung erfolgt kurzzeitig nach Abschluß der Strammung des Sicherheitsgurtes die Zündung der pyrotechnischen Zentraleinheit 28. Das dort freigesetzte Druckgas strömt über die Druckgasleitungen 29 zu den beiden Kolbenzylindern 24 sowie in den Zylinder 33 zur Freigabe der Sperrklinke 31. Während je nach Stellung des Sitzes 11

und damit der Kolben in den Zylindern 24 das Druckgas zunächst den freien Zylinderraum in den Zylindern 24 füllt und alsdann die Kolben wegtreibt, sorgt das in den Zylinder 33 strömende Druckgas für eine Bewegung des Kolbens 34 in der Art, daß der Stift 32, welcher die Sperrklinke 31 in ihrer entsperrten Stellung über der Verzahnung 35 des Sitzträgers 19 hochhält, aus seiner Haltestellung bewegt wird, wonach die drehbar gelagerte Sperrklinke 31 in die Verzahnung 35 einfallen kann.

Der Ausstoß der Kolbenstangen 25 aus den Kolbenzylindern 24 bei gleichzeitiger Abstützung der Kolbenstangen 25 an den fahrzeugfesten Widerlagern 26 hat zur Folge, daß die Zylinder 24 nach hinten bewegt werden, wobei sie über den Kniehebelanschlag 27 die Verriegelungsstange 20 aus ihrer Verrastung in der Lochleiste 22 herausdrehen, wonach der Sitz 11 auf dem Sitzträger 19 frei verschieblich ist. Die weitere rückstoßartige Bewegung der Kolbenzylinder 24 aufgrund des sich weiterhin ausdehnenden Druckgases führt zu einer Sitzverschiebung bis an den hinteren Anschlag, wobei die Sperrklinke 31 über die Verzahnung 35 hinwegläuft und in der jeweiligen Stellung den Sitz gegen eine etwaige reaktive Vorverlagerung, vorzugsweise in dessen Endstellung, sichert.

Infolge der Bewegung des Sitzes 11 nach hinten wird das Seil 37 über die Umlenkrollen 38, 39 gestrammt und zieht aufgrund seiner Verbindung mit der Klemmeinrichtung 18 diese längs der B-Säule des Kraftfahrzeuges nach unten. Die Auslösung der Klemmeinrichtung geschieht dabei, wie schon beschrieben, je nach deren Ausbildung entweder über eine eigene druckgasbetätigte und vom Fahrzeugsensor zur Auslösung gebrachte Kolbeneinheit oder aber aufgrund
der konstruktiven Ausbildung der Klemmeinrichtung
18 durch die Abwärtsbewegung selbst. Infolge der
Strammung des Brustgurtes 14 durch die sich abwärts
bewegende Klemmeinrichtung 18 wird die angeschnallte
Person bei der Sitzbewegung am Sitz 11 gehalten.

Bei dem in Figur 3 gezeigten Ausführungsbeispiel
ist bezüglich des Ablaufs der erfindungsgemäßen
Vorrichtung eine Vereinfachung dergestalt vorgenommen,
daß auf den bei dem Ausführungsbeispiel gemäß den
Figuren 1 und 2 erforderlichen Seilspeicher zum
Ausgleich der Seillänge bei Verschiebung des Sitzes
infolge seiner Anpassung der Sitzstellung an die
Körpermaße des Insassen verzichtet ist. Hierzu
ist der Anschlag des Sitzes 11 am Seil 37 nicht
fest, sondern beweglich ausgeführt, indem der Sitz
11 mit einer Zwinge 41 das Seil 37 übergreift und
so bei geöffneter Zwinge 41 längs des Seiles 37
frei verschoben werden kann. Erst nach Auslösung
der pyrotechnischen Zentraleinheit 28 erfolgt eine
feste Verbindung zwischen Sitz 11 und Seil 37,
indem die Zwinge 41 über die druckgasgetriebene
Kolbeneinheit 42 geschlossen wird, wonach Sitz
11 und Klemmeinrichtung 18 über das Seil 37 wiederum
fest aneinander angekoppelt sind. Dieses Ausführungsbeispiel bietet ferner die Vereinfachung, daß die
Auslösung der Zwinge 41 gleichzeitig zur Freigabe
der entsprechend angeordneten Sperrklinke 31 in
die Sperrstellung in der Verzahnung 35 des Sitzgestelles 19 ausnutzbar ist.

Schließlich kann es sich als vorteilhaft erweisen, in der Kopplung zwischen Sitz 11 und Klemmeinrichtung 18 ein Übersetzungsverhältnis vorzusehen, damit auch kleine Bewegungen des Sitzes 11 in eine entsprechend große Verschiebung der Klemmeinrichtung 18 mit entsprechender Strammung für den Gurt umsetzbar sind. Bei mittelgroßen und großen Personen nämlich steht aufgrund der natürlichen Sitzposition im Unfallgeschehen nur noch wenig freie Verschiebungslänge für den Sitz 11 zur Verfügung, da auch die Sicherheit der auf den Rücksitzen sitzenden Personen bedacht werden muß. In einem solchen Fall führt zwar eine Vorverlagerung des Insassen kaum mehr zu einem Anschlagen an den Armaturen, jedoch ist auch hier eine möglichst starke Straffung des am Körper verlaufenden Sicherheitsgurtes wünschenswert, die bei Einschalten der vorgenannten Übersetzung in die Kopplung zwischen Sitz 11 und Klemmeinrichtung 18 verwirklichbar ist.

Die Erfindung läßt sich in besonders vorteilhafter Weise ergänzen, wenn der Sitz 11 in seiner Endstellung durch die Klinke 31 nicht mehr festgehalten wird, sondern der durch den Aufprall im Unfallgeschehen auf ihn ausgeübten Kraft durch ein Vorfahren bis in eine Mittelstellung nachgibt und erst dann endgültig arretiert wird, wobei die Mittelstellung auf der Schiene 19 derart gewählt ist, daß der Insasse weit genug von den Armaturen entfernt ist. Bei dem Vorfahren des Sitzes 11 soll eine Einrichtung 60 dafür Sorge tragen, daß möglichst viel an Energie vernichtet bzw. umgewandelt wird, so daß die Vorwärtsbewegung des Sitzes bis zu seiner Endstellung entsprechend abgebremst wird.

Hierzu besteht die energieumwandelnde Einrichtung 60 aus einer Hülse 61, die am Sitz in dessen Längsrichtung über der Schiene 19 mit der Verzahnung 35 mittels einer Befestigung 66 befestigt ist. In der Hülse 61 ist eine Stahlstange 62 angeordnet, die mit einer Verdickung 63 ins Innere der Hülse 61 reicht und mit ihrem freien Ende aus der Hülse 61 herausragend an der Klinke 31 angeschlagen und befestigt ist. Im Bereich des Austritts der Stahlstange 62 aus der Hülse 61 ist eine Stahlbuchse 64 angeordnet, welche die Stahlstange 62 mit ihrem geringeren Durchmesser umgreift und ihrerseits in der Hülse 61 festlegt. Schließlich ist im vorderen Bereich der Hülse 61 noch eine die Verdickung 63 der Stahlstange 62 umgreifende vibrationshemmende Muffe 65 angeordnet.

Bei Auslösung der Vorrichtung läuft der Vorgang des Verschiebens des Sitzes nach hinten in gleicher Weise ab wie bei den zuvor beschriebenen Ausführungsbeispielen. In diesem Fall fährt die Hülse 62 aufgrund ihrer Befestigung am Sitz 11 mit dem Sitz nach hinten, wobei die Klinke 31 über die Verzahnung 35 in der Sitzschiene 19 hinwegläuft. Sobald die Endstellung des Sitzes 11 erreicht ist, verhakt sich die Klinke 31 in dem letzten Zahn der Verzahnung 35 in der Sitzschiene 19 und bleibt dort stehen. Der Sitz 11 kann sich nun auf der Schiene 19 wieder nach vorne bewegen, wobei die Stahlstange 62 aus der Hülse 61, welche mit dem Sitz 11 verfährt, herausgezogen wird, da die Stahlstange 62 an der nunmehr ortsfesten Sperrklinke 31 befestigt ist. Bei dem Herausziehen der Stahlstange 62 aus der Hülse 61 wird deren Verdickung 63 an der Buchse 64 verformt, so daß die Auszugsbewegung der Stahlstange 62 aus der Hülse 61 und damit das Entfernen
des Sitzes 11 mit Hülse 61 von der Klinke 31 mit
daran angeschlagener Stahlstange 62 abgebremst
wird. Auf diese Weise wird die sich aus dem Unfallgeschehen
ergebende Aufprallenergie wenigstens zum großen
Teil über die von der Stahlstange 62 mit Verdickung
63 bei ihrer Auszugsbewegung aus der Hülse 61 mit
Stahlbuchse 64 geleistete Verformungsarbeit vernichtet,
so daß die auf den Körper des angeschnallten Insassen
noch einwirkende Stoßenergie deutlich verringert
ist.

Wie in der Zeichnung im einzelnen nicht weiter
dargestellt, kann gemäß der Erfindung auch von
einem zentralen Fahrzeugsensor als Auslöseorgan
für die mehreren pyrotechnischen Antriebsorgane
für die Sitzbewegung, die Klemmeinrichtung und
den Gurtstraffer abgesehen, vielmehr können den
jeweiligen Antriebsorganen unmittelbar eigene dezentrale Sensoren zugeordnet werden. Diese dezentralen
Sensoren sind nun über entsprechende Zuleitungen
lediglich noch an das elektrische Netz des Kraftfahrzeuges angeschlossen, so daß eine Stromversorgung gegeben ist. Dieser Vorschlag ist mit dem
Vorteil verbunden, daß nunmehr nicht mehr ausgehend
vom Haupt-Fahrzeugsensor das gesamte Fahrzeug mit
getrennten Signalkabeln verkabelt werden muß, an
welche die jeweiligen Treibladungen der verschiedenen
Sicherheitssysteme auf den mehreren Fahrzeugsitzen
anzuschließen sind. Mit zunehmender Anzahl der
Fahrzeugsitz-Sicherheitsgurtsysteme wird nämlich
auch der Haupt-Fahrzeugsensor in seiner Bauform
sehr aufwendig und teuer, da er entsprechend konditioniert und eingerichtet werden muß.

Die nach einem Ausführungsbeispiel der Erfindung
vorgesehene dezentrale Anordnung eines Sensors
zu jedem Antrieb bietet den Vorteil, daß der Sensor
selbst kleiner und billiger gehalten, beispielsweise
als Microchip ausgebildet sein kann, da der Sensor
jeweils nur noch eine einzige Treibladung auslösen
muß. Hierzu kommt in vorteilhafter Weise, daß jeder
Sensor mit den genau auf seine Position im Kraftfahrzeug berechneten Verzögerungswerten im Hinblick
auf die Auslösung der Treibladung konditioniert
werden kann, womit eine größere Genauigkeit und
Sicherheit bei der Auslösung der Sicherheitseinrichtungen
verbunden ist. Der Sensor selbst kann dabei als
dezentraler Einzelsensor in der Art ausgebildet
sein, wie dies allerdings als Zentralsensor für
vier Sicherheitsgurteinrichtungen in einem Kraftfahrzeug in der DE-OS 33 26 277 beschrieben ist.

Es ist im Hinblick auf den Reparaturaufwand nach
Eintreten einer die Auslöseschwelle des Sensors
überschreitenden negativen Beschleunigung des Kraftfahrzeuges besonders von Vorteil, wenn jeder zugeordnete
Einzelsensor erst bei Anlegen des ihm zugeordneten
Sicherheitsgurtsystems funktionsbereit gemacht
wird, indem die für den Sensor erforderliche Stromversorgung erst durch den Anlegevorgang sichergestellt, vorzugsweise durch Einstecken der Schloßzunge in das Gurtschloß mit Schließen eines im
Schloß entsprechend vorgesehenen Kontaktes erreicht
wird. Auf diese Weise kann in vorteilhafter Weise
sichergestellt werden, daß nach Überschreiten der
Auslöseschwelle nur die Sicherheitgurteinrichtungen
ausgelöst werden, die am Körper eines angeschnallten
Insassen anliegen, während die unbenutzten Systeme von einer Auslösung verschont sind. Damit ist nach
derartigen Situationen eine erhebliche Kosteneinsparung bei der erneuten Inbetriebnahme des Fahrzeuges
verbunden.

Weiterhin sind in die Erfindung an Stelle der beschriebenen pyrotechnisch beaufschlagbaren Kolbeneinheit
als Antrieb für die Sitzverschiebung auch andere
Antriebsformen einbeziehbar. So wird nach der Erfindung auch vorgeschlagen, unter dem entsprechenden
Sitz eine träge, beweglich geführte Masse anzuordnen,
welche sich im Unfallgeschehen durch die dann auftretende Energie aus ihrer Verankerung löst oder
aktiv daraus gelöst wird, und deren im Unfallgeschehen wirkende Bewegungsenergie in die Antriebsbewegung für den Fahrzeugsitz umsetzbar ist. In
Abwandlung dazu ist es auch vorgesehen, statt zusätzlicher bewegter Massen Bestandteile des Fahrzeuges
selbst, wie beispielsweise Getriebe oder Achsen,
für einen derartigen Antrieb vorzusehen, die im
Unfallgeschehen definiert, beispielsweise über
Sollbruchstellen, aus ihrem Verbund mit dem Fahrzeug
gelöst und zur Erzeugung der für die Sitzbewegung
erforderlichen Energie über eine vorbestimmte Bewegungsbahn geführt werden.

Eine weitere Antriebsmöglichkeit besteht nach der
Erfindung darin, eine entsprechend angeordnete
Kolbeneinheit nicht pyrotechnisch, sondern mittels
vorgespannter Gase oder einer Flüssigkeit zu betreiben,
indem die Druckerzeugung im Gas-oder Flüssigkeitssystem durch die Deformierung oder Bewegung dazu
vorgesehener Teile des Kraftfahrzeuges geschieht.
Hierzu wäre z. B. die Stoßstange des Kraftfahr-

0154883

zeuges heranziehbar, deren Bewegung im Unfallgeschehen in eine Druckerzeugung im Antriebsssstem
für die Sitzverschiebung ohne weiteres umsetzbar
ist.

Die in der vorstehenden Beschreibung, den Patentansprüchen, der Zusammenfassung und der Zeichnung
offenbarten Merkmale des Gegenstandes dieser Unterlagen können sowohl einzeln als auch in beliebigen
Kombinationen untereinander für die Verwirklichung
der Erfindung in ihren verschiedenen Ausführungsformen wesentlich sein.

Patentansprüche

Patentansprüche

1. Vorrichtung zur Verhinderung der Vorverlagerung
   von angeschnallten Personen im Unfallgeschehen,
   insbesondere in Kraftfahrzeugen, bestehend aus
   einem auf einem Träger verschieblichen Fahrgastsitz, aus einem Dreipunkt-Sicherheitsgurt sowie
   einem an einem Fahrzeugaufbauteil befestigten
   selbstsperrenden Gurtaufroller, dadurch gekennzeichnet, daß der Fahrgastsitz (11) mittels
   eines im Unfallgeschehen von einem fahrzeugseitigen Sensor auslösbaren Antriebs (24, 25,
   26) nach hinten verschiebbar und an eine an
   einem Fahrzeugaufbauteil beweglich geführte
   Klemmeinrichtung (18) für das Gurtband (16)
   gekuppelt ist.

2. Vorrichtung nach Anspruch 1, dadurch gekennzeichnet, daß als Antrieb für die Sitzverschiebung wenigstens eine mit einem Antriebsmedium beaufschlagte Kolbeneinheit (24) vorgesehen ist,
die mit einem Ende an einem fahrzeugfesten Teil
(26) und mit dem anderen Ende an einer Verriegelungsstange (20) für den Fahrgastsitz (11) angreift.

3. Vorrichtung nach Anspruch 2, dadurch gekennzeichnet, daß die Verriegelungsstange (20) am
Fahrgastsitz (11) drehbar gelagert und über
eine an wenigstens einem Ende vorgesehene Hakengestaltung (21) in einer am Sitzträger (19)
angeordneten Lochleiste (20) verrastbar ist.

4. Vorrichtung nach einem der Ansprüche 1 - 3,
dadurch gekennzeichnet, daß als Antrieb zwei
druckgasbetätigte Zylinder (24) vorgesehen sind,
deren Druckgasversorgung über Leitungen (29)
von einer zentralen, vom Fahrzeugsensor auslösbaren
pyrotechnischen Einheit (28) geschieht.

5. Vorrichtung nach Anspruch 2 - 4, dadurch gekennzeichnet, daß die Verbindung zwischen Kolbeneinheit
(24) und Verriegelungsstange (20) kniehebelartig
ausgeführt ist.

6. Vorrichtung nach einem der Ansprüche 1 - 5,
dadurch gekennzeichnet, daß am Fahrgastsitz
(11) eine die Rückholung des Fahrgastsitzes
nach Auslösung des Antriebs (24) verhindernde
Sperrgestaltung (31, 32, 33) vorgesehen ist.

7. Vorrichtung nach Anspruch 6, dadurch gekennzeichnet,
daß die Sperrgestaltung aus einer am Fahrgastsitz (11) drehbeweglich angeordneten Klinke (31) zum Eingriff in eine am Sitzträger (19) entsprechend ausgebildete Verzahnung (35) besteht, wobei die Sperrgestaltung (31, 32, 33) über eine Druckgasleitung (29) an die pyrotechnische Zentraleinheit (28) angeschlossen und von dem fahrzeugseitigen Sensor auslösbar ist.

8. Vorrichtung nach einem der Ansprüche 1 - 7, dadurch gekennzeichnet, daß der Fahrgastsitz (11) über ein Seil (37) mit der Klemmeinrichtung (18) verkuppelt ist.

9. Vorrichtung nach Anspruch 8, dadurch gekennzeichnet, daß das Seil (37) am Vorderende des Fahrgastsitzes (11) befestigt ist und die Seilführung längs des Türschwellers und der B-Säule über jeweils ortsfest angeordnete Umlenkrollen (38, 39) bis zur Klemmeinrichtung (18) erfolgt, und daß im Seil (37) ein Seilspeicher (40) angeordnet ist.

10. Vorrichtung nach Anspruch 8, dadurch gekennzeichnet, daß das Seil (37) im Bereich der B-Säule ortsfest befestigt und längs des Türschwellers schlaufenartig über Umlenkrollen (38, 39) bis zur Klemmeinrichtung (18) geführt ist und daß der Fahrgastsitz (11) mittels einer in offenem Zustand längs des Seiles (37) beweglichen und über eine druckgasbetätigte Kolbeneinheit (42) schließbaren Zwinge (41) am Seilabschnitt zwischen Befestigung und vorderer Umlenkrolle (38) angreift.

11. Vorrichtung nach einem der Ansprüche 7 oder 10, dadurch gekennzeichnet, daß die Kolbeneinheit (42) zur Auslösung der Sperrklinke (31) eingerichtet und über eine Druckgasleitung (29) an die
pyrotechnische Zentraleinheit (28) angeschlossen
ist.

12. Vorrichtung nach einem der Ansprüche 1 - 11,
dadurch gekennzeichnet, daß die Kopplung zwischen
Sitz (11) und Klemmeinrichtung (18) eine Übersetzungseinrichtung zur verstärkenden Umwandlung
der Sitzbewegung in die Bewegung der Klemmeinrichtung (18) aufweist.

13. Vorrichtung nach Anspruch 12, dadurch gekennzeichnet, daß der Seilspeicher (40) als Übersetzungseinrichtung ausgebildet ist.

14. Vorrichtung nach einem der Ansprüche 1 - 13,
wobei die Klemmeinrichtung wenigstens eine
bewegliche Klemmbacke aufweist, dadurch gekennzeichnet, daß die Klemmbacken der Klemmeinrichtung (18) an dem Seil (37) angeschlagen
sind und daß an der beweglichen Klemmbacke
eine diese zur Anlage am Gurtband (16) bringende
pyrotechnische Kolbeneinheit (43) vorgesehen
ist.

15. Vorrichtung nach einem der Ansprüche 1 - 13,
wobei die Klemmeinrichtung wenigstens eine
bewegliche Klemmbacke aufweist, dadurch gekennzeichnet, daß die Klemmbacken (44, 45) der
Klemmeinrichtung (18) beiderseits einer Stange
(46) über Querlenker (47) angelenkt und auf
diese zu bewegliche angeordnet sind, wobei
an dem unteren Ende der Stange (46) das Seil
(37) angeschlagen ist.

0154883

16. Vorrichtung nach Anspruch 15, dadurch gekennzeichnet, daß die Stange (46) in einer sich abwärts verengenden Zwangsführung (50) geführt ist, wobei der Übergang vom offenen zum sich verjüngenden Teil der Zwangsführung (50) gerundet ist.

17. Vorrichtung nach einem der Ansprüche 15 oder 16, dadurch gekennzeichnet, daß die Klemmbacken (44, 45) an ihrer dem Antriebsseil (37) zugewandten Seite von außen nach innen gerundet sind.

18. Vorrichtung nach Anspruch 16, dadurch gekennzeichnet, daß die Zwangsführung (50) in ihrem Inneren mit die Aufwärtsbewegung der Klemmeinrichtung (18) verhindernden Sperrmitteln versehen ist.

19. Vorrichtung nach wenigstens einem der Ansprüche 1 - 18, dadurch gekennzeichnet, daß eine auf die Gurtaufwickelwelle des Gurtaufrollers (17) wirkende pyrotechnisch angetriebene und vom Fahrzeugsensor auslösbare Strammvorrichtung (51) für den Sicherheitsgurt (10) vorgesehen ist.

20. Vorrichtung nach Anspruch 19, dadurch gekennzeichnet, daß die Auslösung der Strammvorrichtung (51) zeitlich vor Auslösung der zentralen pyrotechnischen Einheit (28) sowie der Klemmeinrichtung (18, 43) erfolgt.

21. Vorrichtung insbesondere nach einem der Ansprüche 1 - 20, dadurch gekennzeichnet, daß nach Abschluß der Verschiebung des Sitzes (11) nach hinten der Sitz (11) über eine energieumwandelnde Einrichtung (60) nach vorne bis in eine Mittelstellung verfahrbar und dort arretierbar ist.

22. Vorrichtung nach Anspruch 22, dadurch gekennzeichnet, daß am Sitz (11) in dessen Längsrichtung eine Hülse (61) befestigt ist, in
welcher eine aus der Hülse (61) herausragende
und an der Klinke (31) angeschlagene Stahlstange
(62) angeordnet ist.

23. Vorrichtung nach Anspruch 23, dadurch gekennzeichnet, daß die Stahlstange (62) in ihrem
in der Hülse (61) befindlichen Bereich einen
größeren Durchmesser aufweist als in dem aus
der Hülse (61) herausragenden Bereich.

24. Vorrichtung nach Anspruch 23, dadurch gekennzeichnet, daß an der der Klinke (31) zugewandten
Seite der Hülse (61) eine die Stahlstange (62)
mit deren geringerem Durchmesser umgreifende
Stahlbuchse (64) angeordnet ist.

25. Vorrichtung nach Anspruch 24, dadurch gekennzeichnet, daß zwischen Stahlstange (62) und
Hülse (61) eine vibrationsdämpfende Muffe (65)
angeordnet ist.

26. Vorrichtung insbesondere nach einem der Ansprüche
1, 4 oder 7, dadurch gekennzeichnet, daß jedem
Antrieb (28, 43, 52) für jede Sicherheitseinrichtung (11, 18, 51) im Kraftfahrzeug ein
eigener Sensor zugeordnet ist, welcher über
Zuleitungen an die Energieversorgung des Kraftfahrzeuges gekoppelt ist.

27. Vorrichtung nach Anspruch 26, dadurch gekennzeichnet, daß Antrieb und Sensor eine Baueinheit bilden, wobei jeder Sensor entsprechend seiner räumlichen Anordnung im Kraftfahrzeug verzögerungsgerecht konditioniert ist.

28. Vorrichtung nach Anspruch 26 oder 27, dadurch gekennzeichnet, daß die Stromversorgung jedes Einzelsensors an das Anlegen des Sicherheitssystems, vorzugsweise an das Schließen des Gurtschlosses, gekoppelt ist.

29. Vorrichtung nach Anspruch 1 und/oder einem oder mehreren der vorangehenden Ansprüche, dadurch gekennzeichnet, daß als Antrieb für die Sitzverschiebung eine im Fahrzeug beweglich geführte träge Masse vorgesehen ist, deren Bewegung im Unfallgeschehen durch die dabei entstehende Energie bewirkt wird.

30. Vorrichtung nach Anspruch 1 und/oder einem oder mehreren der vorangehenden Ansprüche, dadurch gekennzeichnet, daß als Antrieb für die Sitzverschiebung eine druckbeaufschlagte gas- oder flüssigkeitsgefüllte Kolbeneinheit vorgesehen ist, wobei die Druckerzeugung durch im Unfallgeschehen bewegte Fahrzeugteile bewirkt wird.

Zusammenfassung

Fig. 1

Fig.2

Fig.3

Fig. 4

Fig. 5

0154883